Europäisches Patentamt

European Patent Office

Office européen des brevets

(19)

(11) EP 0 636 672 B1

## (12) FASCICULE DE BREVET EUROPEEN

(45) Date de publication et mention
de la délivrance du brevet:
**08.09.1999 Bulletin 1999/36**

(51) Int Cl.6: **C09K 5/04**, F25B 29/00

(21) Numéro de dépôt: **94401742.5**

(22) Date de dépôt: **28.07.1994**

(54) **Production de froid par adsorption/désorption de dioxyde de carbone**

Erzeugung von Kälte durch Adsorption/Desorption von Kohlendioxyd

Production of cold by adsorption/desorption of carbon dioxide

(84) Etats contractants désignés:
**AT BE CH DE DK ES FR GB GR IE IT LI LU MC NL PT SE**

(30) Priorité: **29.07.1993 FR 9309348**

(43) Date de publication de la demande:
**01.02.1995 Bulletin 1995/05**

(73) Titulaire: **MANUFACTURE DE VETEMENTS PAUL BOYE S.A.**
**34200 Sète (FR)**

(72) Inventeurs:
- **Guillot, André**
  **F-66330 Saleilles (FR)**
- **Marty, Alain**
  **F-66000 Perpignan (FR)**
- **Pelletier, Patrice**
  **F-66000 Perpignan (FR)**
- **Spinner, Bernard**
  **F-66200 Corneilla Del Vercol (FR)**
- **Boye, Philippe**
  **F-34200 Sète (FR)**

(74) Mandataire: **Aron, Georges et al**
**Cabinet de Boisse**
**37, Avenue Franklin D. Roosevelt**
**75008 Paris (FR)**

(56) Documents cités:
**EP-A- 0 523 849**          **FR-A- 2 509 846**
**FR-A- 2 526 926**

- **CHEMICAL ABSTRACTS, vol. 109, no. 14, 3 Octobre 1988, Columbus, Ohio, US; abstract no. 113100v, TOKUNAGA, NOBUYUKI ET AL 'Adsorption isotherms of methane, hydrogen sulfide, and mixed gas of methane and carbon dioxide on activated carbon fiber' & J. CHEM. ENG. JPN., 21(4), 431-3, 1988**
- **CHEMICAL ABSTRACTS, vol. 84, no. 4, 26 Janvier 1976, Columbus, Ohio, US; abstract no. 22524k, ERMOLENKO, I. N. ET AL 'Adsorption of carbon dioxide on activated carbon fibers' & VESTSI AKAD. NAVUK B. SSR, SER. KHIM. NAVUK, (5), 20-3, 1975**

# Description

L'invention concerne la production de froid par adsorption/désorption de dioxyde de carbone avec utilisation de fibres de carbone activé ou de charbon actif comme matière adsorbante.

Messieurs André GUILLOT, Alain MARTY, Patrice Pelletier et Bernard SPINNER, appartenant au C.N.R.S., ont collaboré à la mise au point de la présente invention.

L'utilisation de dioxyde de carbone pour la production de froid et/ou de chaleur par un cycle à absorption mettant en jeu un solvant liquide du dioxyde de carbone est connue de FR-A-2 509 846 ou de FR-A-2 519 416.

Par ailleurs, FR-A-2 526 926 a proposé un procédé de production de froid et/ou de chaleur à résorption, selon lequel on utilise du dioxyde de carbone dans un cycle intermittent mettant en jeu une adsorption ou absorption du $CO_2$ par un liquide ou un solide, puis une désorption du $CO_2$. Comme matière solide adsorbante, il est proposé des zéolites (tamis moléculaires), des argiles, des charbons actifs ou du gel de silice. Cependant, seul l'emploi d'un tamis moléculaire fait l'objet d'un exemple.

Enfin, EP-A-0 523 849 décrit un procédé de réfrigération par compression/décompression de $CO_2$, dans une chambre contenant un lit de matière adsorbante, telle qu'une zéolite.

A la connaissance de la Demanderesse, aucun des systèmes de production de froid précités n'a connu de développement industriel. Ceci s'explique par l'efficacité insuffisante de ces systèmes.

Il serait pourtant extrêmement intéressant de pouvoir disposer de systèmes de production de froid par adsorption/désorption utilisant le dioxyde de carbone comme fluide de travail car les systèmes actuels de production de froid par adsorption ou absorption utilisant de l'eau, du méthanol ou de l'ammoniac comme fluide de travail souffrent d'inconvénients importants, à savoir :

- de fonctionner à basse pression, créant des limitations au niveau des transferts de gaz dans les milieux adsorbants (cas de l'eau) ;
- de ne pas pouvoir faire du froid négatif (cas de l'eau) ;
- de se décomposer à partir de 130°C (cas du méthanol) ;
- de présenter une toxicité (cas du méthanol et de l'ammoniac).

Le dioxyde de carbone $CO_2$, en effet, permettrait de s'exonérer de ces inconvénients car il permet théoriquement le fonctionnement de systèmes à très basse température (le point triple est à -57°C et à 5,1 bars), n'est pas toxique, et fonctionne sous une pression positive. Le point critique est toutefois à 31°C, 73 bars.

Il existe donc un besoin pour des systèmes de production de froid basé sur l'utilisation de $CO_2$ qui soient plus performants que les systèmes connus.

La présente invention vise à satisfaire ce besoin.

Plus précisément, l'invention concerne un procédé de production de froid comprenant au moins une étape d'adsorption de dioxyde de carbone par une matière solide adsorbante, et au moins une étape de désorption du dioxyde de carbone adsorbé dans ladite matière adsorbante, caractérisé en ce que ladite matière adsorbante comprend des fibres de carbone activé ou un charbon actif et présente une surface spécifique d'au moins 700 $m^2$/g et une surface spécifique externe d'au moins 0,005 $m^2$/g.

L'invention concerne aussi un dispositif de production de froid par adsorption/désorption de dioxyde de carbone, comprenant au moins une enceinte garnie d'une matière solide adsorbante, caractérisé en ce que ladite matière adsorbante comprend des fibres de carbone activé ou un charbon actif et présente une surface spécifique d'au moins 700 $m^2$/g et une surface spécifique externe d'au moins 0,005 $m^2$/g.

Par "fibres de carbone activé", on désigne les fibres de carbone activé elles-mêmes et divers produits fibreux fabriqués à partir de ces fibres, par exemple, des feutres, des feuilles de papier incorporant des fibres de carbone activé, des feuilles formées à partir de mélange de fibres de carbone activé et de fibres polymères, des structures de type nid d'abeilles fabriquées à partir de feuilles gaufrées ou ondulées de papier incorporant des fibres de carbone activé, des pièces moulées, etc....

Les fibres de carbone activé sont très fines, ayant typiquement un diamètre de 5-15 μm.

Les fibres de carbone activé et les produits fibreux les incorporant ont une surface spécifique très élevée, typiquement de 700 à 2500 $m^2$/g et une surface spécifique externe également très élevée, typiquement de 0,2 à 0,7 $m^2$/g, selon les qualités. On préfère utiliser des fibres dont la surface spécifique est d'au moins 1000 $m^2$ /g.

Ces produits sont des produits disponibles dans le commerce. On peut citer, par exemple, les produits vendus sous la désignation AD'ALL par la Société japonaise OSAKA GAS Co. Ltd, ou sous les désignations KF (ou K-Filter) et AF par la Société japonaise TOYOBO Co. Ltd, Osaka, Japan. Tous ces produits sont préconisés comme matières filtrantes à des fins de purification ou de désodorisation. Les fibres de carbone activé entrant dans les produits AD'ALL sont fabriquées à partir de brai de houille, tandis que les fibres de carbone des produits KF sont fabriquées à partir de fibres cellulosiques par carbonisation et activation.

Des essais effectués pour déterminer les quantités de $CO_2$ que des fibres de carbone activé sont susceptibles de fixer ont montré la répétabilité de l'adsorption/désorption sur un large domaine de température et de pression. L'enthalpie d'adsorption/désorption est de l'ordre de 25 kJ par mole de $CO_2$ adsorbé.

A la place des fibres de carbone activé, ou en mélange avec elles, on peut aussi utiliser un charbon actif à condition qu'il présente une surface spécifique d'au moins 700 m$^2$/g, de préférence d'au moins 1000 m$^2$/g, et une surface spécifique externe d'au moins 0,005 m$^2$/g, de préférence d'au moins 0,02 m$^2$/g.

Un tel charbon actif est disponible dans le commerce, sous la désignation commerciale PICACTIF, Référence TA60 ou TA90, auprès de la Société PICA, 92309 Levallois, France. Il a une surface spécifique de plus de 1000 m$^2$/g et une surface spécifique externe d'environ 0,02 m$^2$/g et se présente sous la forme de granules d'une grosseur d'environ 1 à 4 mm.

L'invention n'est absolument pas liée à un procédé de production de froid particulier et peut être mise en oeuvre dans des machines très variées.

Par exemple, le procédé de l'invention peut être mis en oeuvre dans une machine à simple effet, dans une machine du genre de celle décrite dans FR-A-2 615 601, dans une machine à résorption, par exemple du genre décrit dans FR-A-2 526 926, ou encore dans une machine de réfrigération du genre décrit dans EP-A-0 523 849.

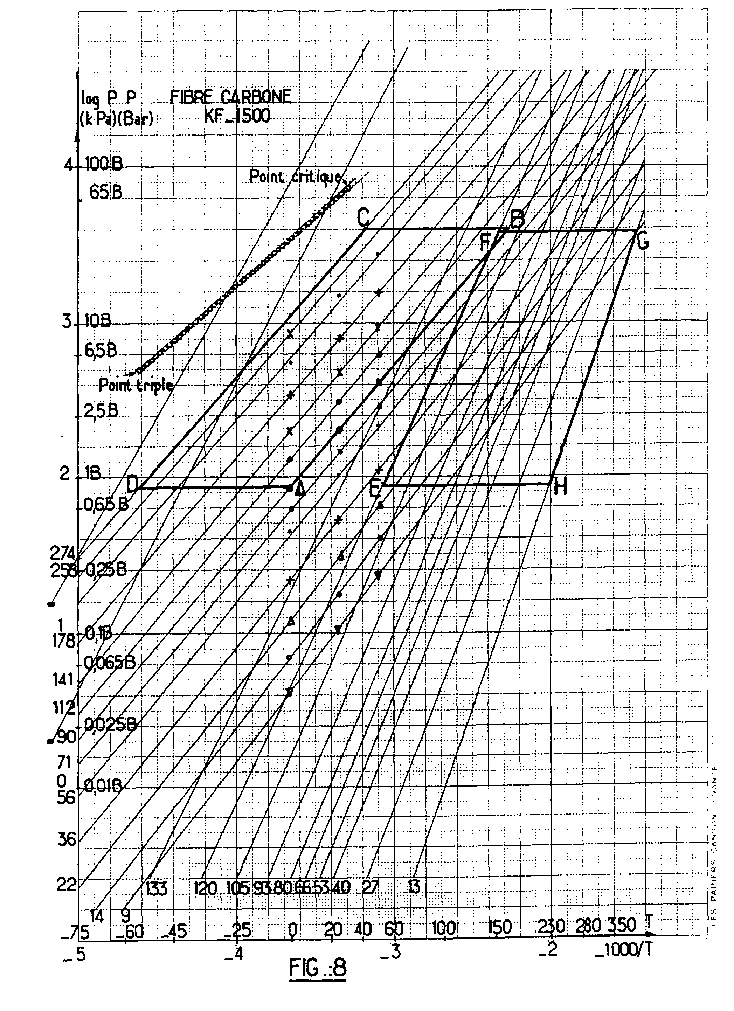

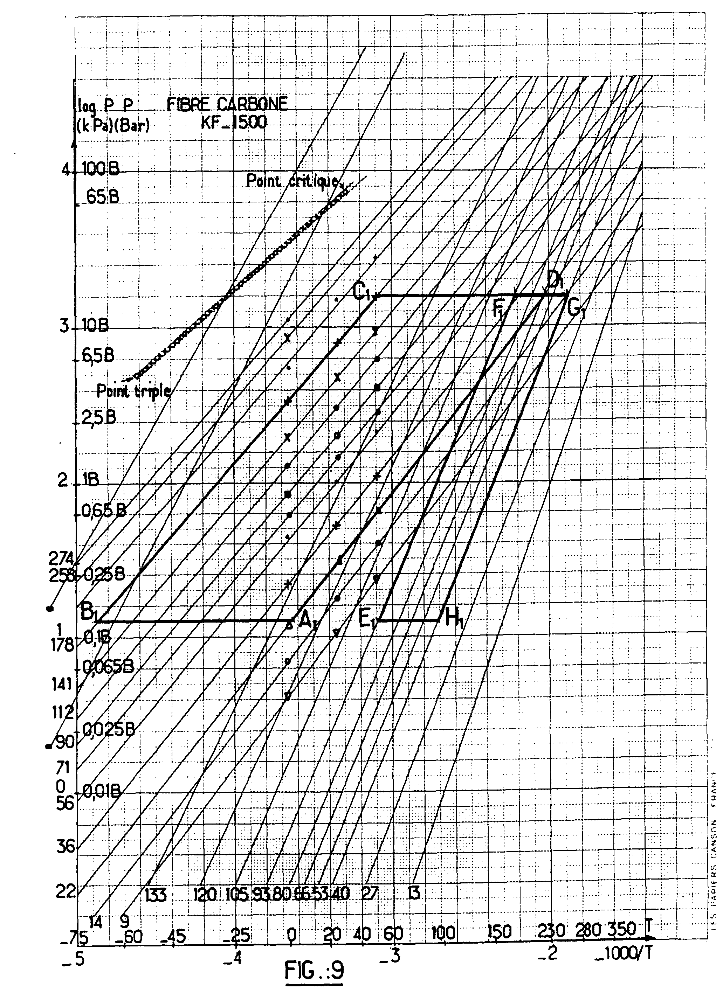

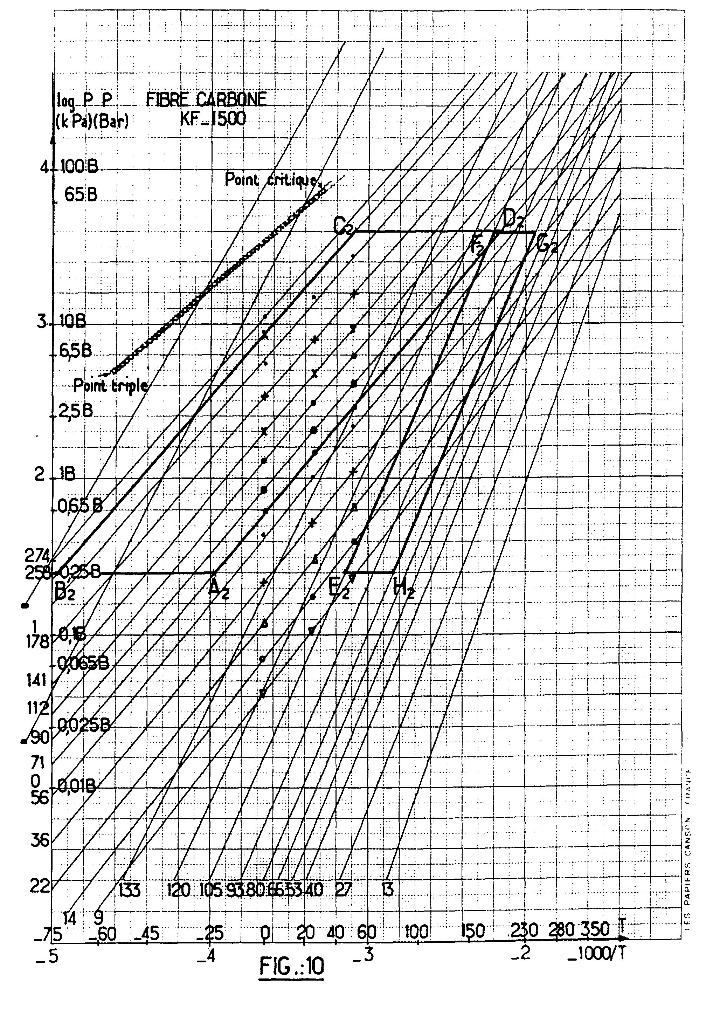

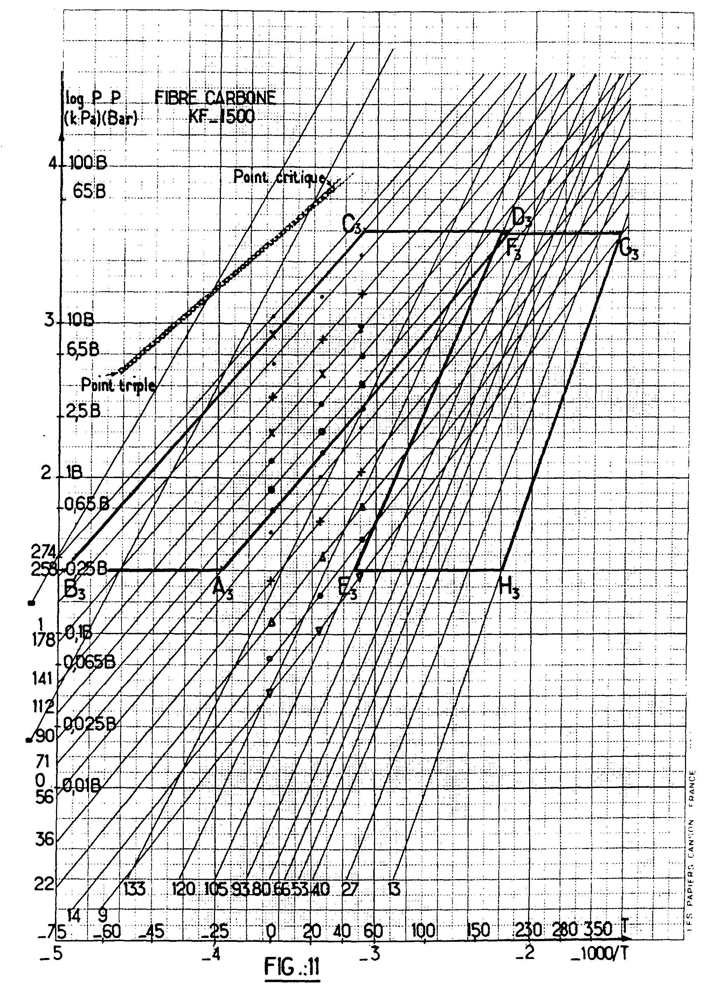

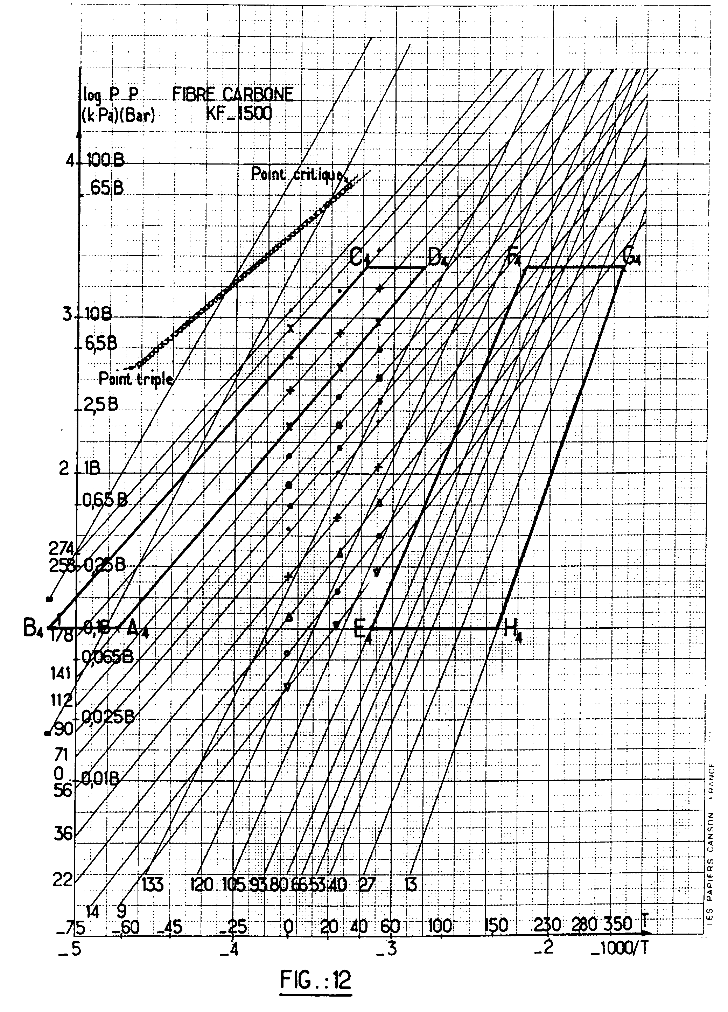

L'invention se prête particulièrement bien à la réalisation de thermotransformateur à résorption mettant en oeuvre deux matières solides adsorbantes différentes contenues, respectivement, dans deux chambres ou enceintes interconnectables, l'une de ces matières solides adsorbantes étant conforme à l'invention, et l'autre matière solide adsorbante étant choisie de façon que, sur un diagramme de Clapeyron, le cycle d'adsorption/désorption isostérique de la matière adsorbante conforme à l'invention se trouve à gauche du puits de température (15 à 35°C selon que l'on utilise de l'eau ou de l'air comme fluide d'échange de chaleur) et le cycle d'adsorption/désorption isostérique de l'autre matière adsorbante se trouve à droite dudit puits de température, comme l'illustrent, par exemple, les figures 8 à 12 ci-après.

Un exemple de ladite autre matière adsorbante est une zéolite.

L'invention se prête bien à la production de froid allant de 0° à - 60°C environ, selon les conditions opératoires choisies.

La description qui va suivre faite en regard des dessins annexés fera bien comprendre l'invention.

Les figures 1 à 6 sont des diagrammes de Clapeyron comportant des isostères de fibre de carbone activé et illustrant divers cycles de fonctionnement de machines de production de froid à simple effet ;
la figure 7 est un diagramme de Clapeyron comportant des isostères d'une zéolite ;
les figures 8 à 12 sont des diagrammes de Clapeyron comportant des isostères de fibre de carbone activé et de zéolite et illustrant divers cycles de fonctionnement de machines de production de froid à résorption ;
la figure 13 est une vue schématique illustrant une machine de production de froid à simple effet ;
la figure 14 est une vue schématique illustrant une machine de production de froid à résorption ; et
la figure 15 est un diagramme représentant la fonction de Dubinin pour divers agents adsorbants.

Des essais ont été effectués pour déterminer les volumes de $CO_2$ que des fibres de carbone activé, en l'espèce un feutre de fibres de carbone activé vendu sous la désignation KF 1500 par la Société japonaise TOYOBO Co. Ltd., peuvent adsorber. Le feutre, selon les spécifications du fournisseur, offre une surface spécifique de 1400-1450 m$^2$ /g et pèse 180-220 g/m$^2$. Sa masse volumique apparente est de 0,045 g/cm$^3$. On a répété des opérations d'adsorption/désorption dans un large domaine de températures et de pressions et tracé les isostères c'est-à-dire les lignes d'équilibre, à un volume donné (en cm$^3$) de $CO_2$ adsorbé par gramme de feutre fibreux, dans le diagramme de Clapeyron.

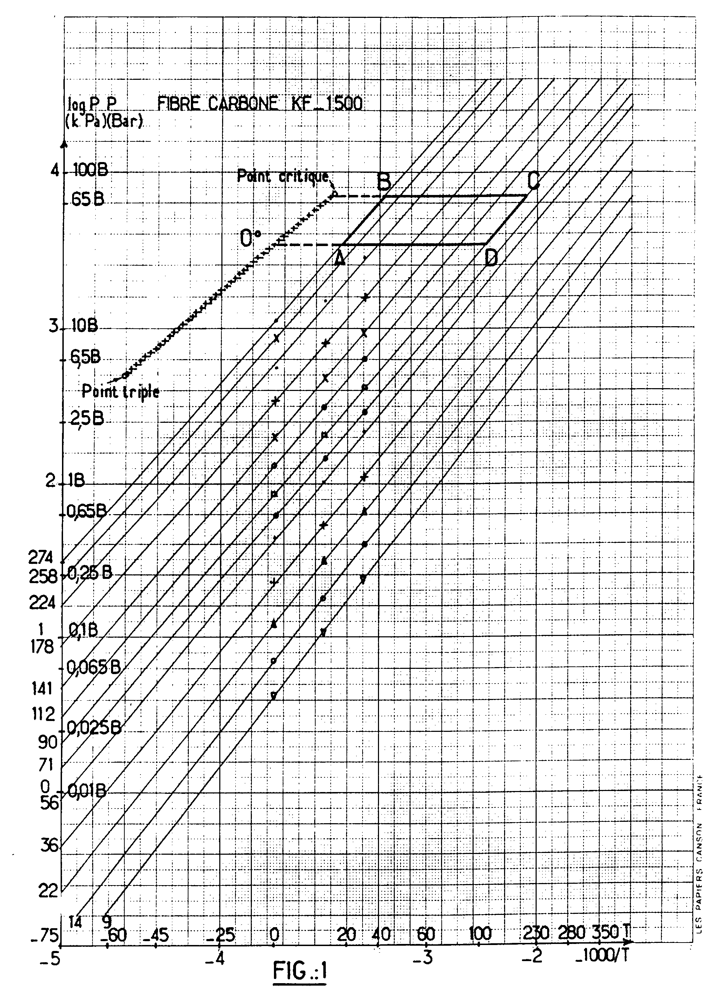

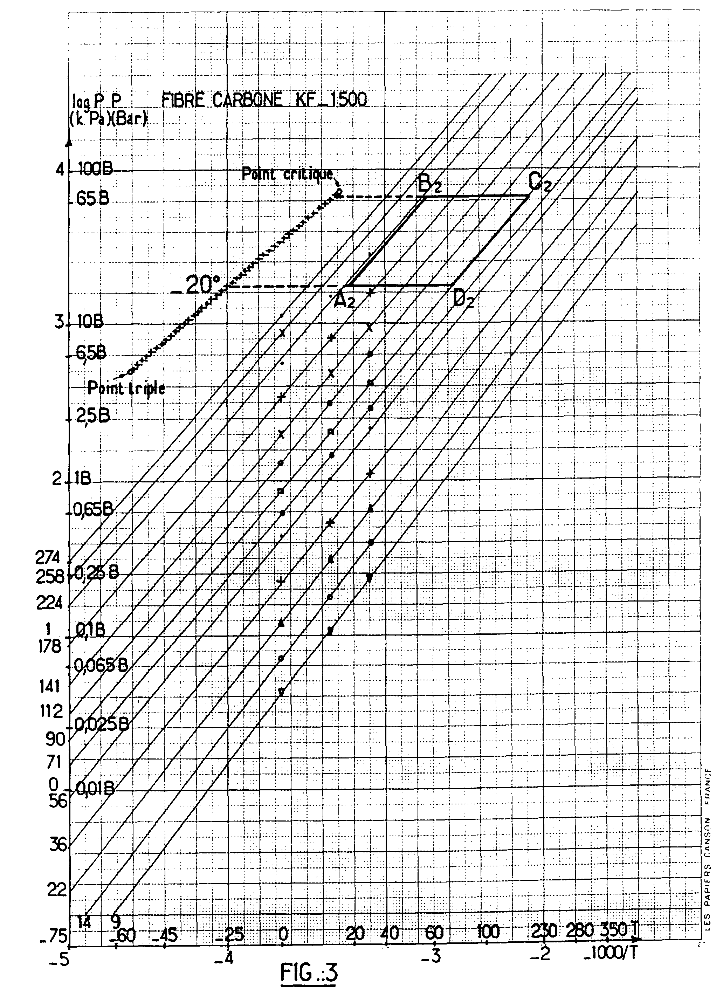

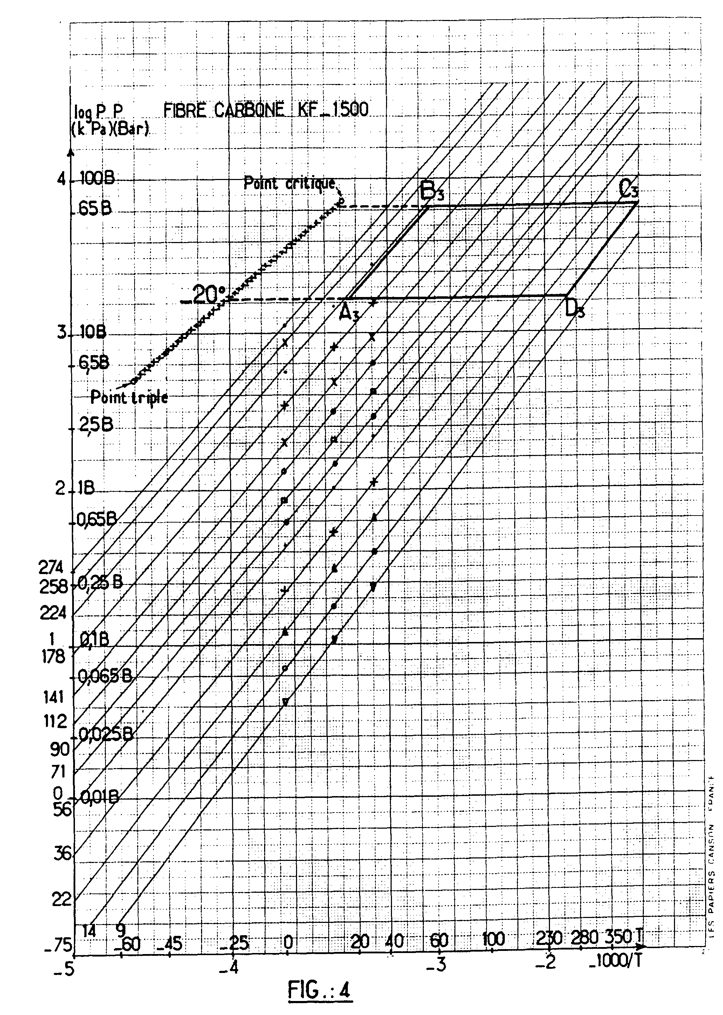

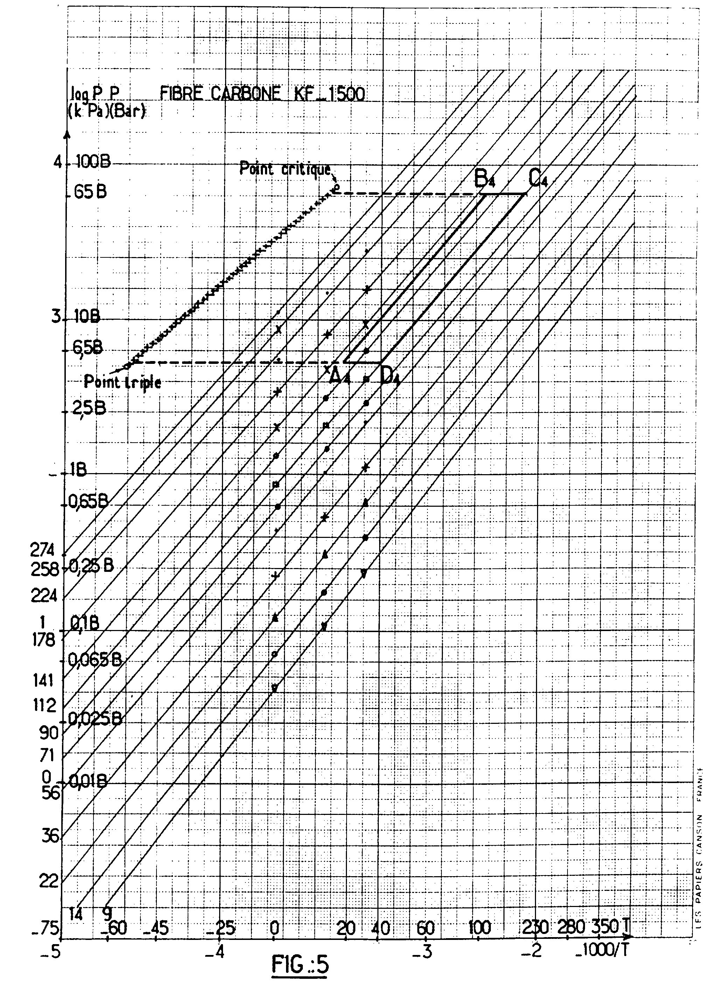

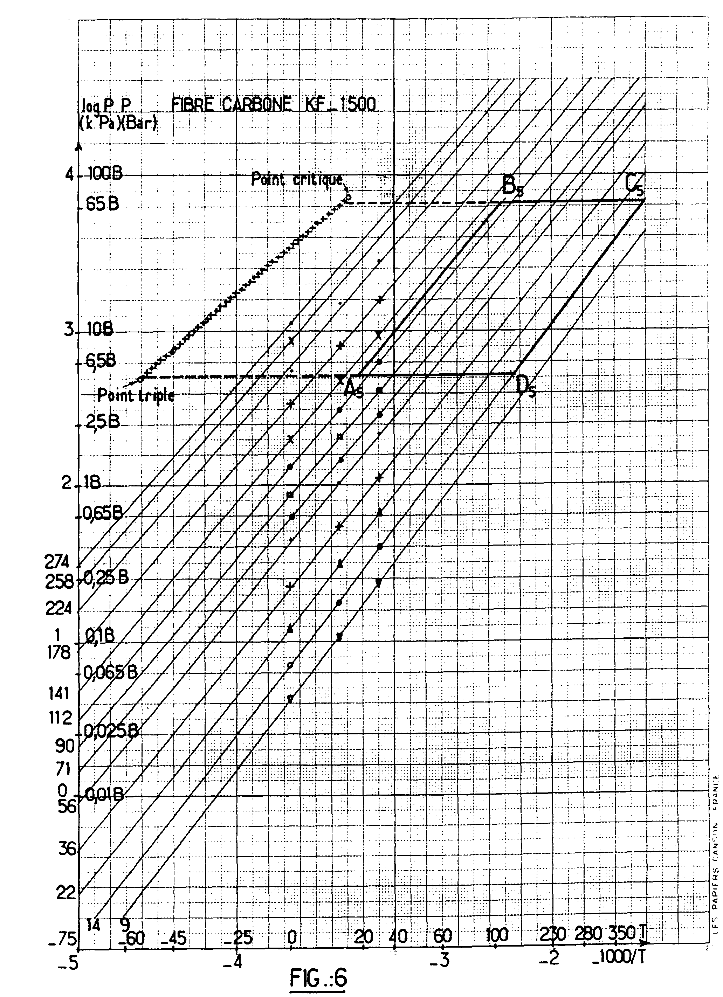

Les figures 1 à 6 sont des diagrammes de Clapeyron reproduisant le réseau d'isostères obtenues. On a également représenté sur ces diagrammes, ainsi que sur les suivants (en trait formé d'une suite de croix) la droite joignant le point triple et le point critique du $CO_2$.

Les quadrilatères ABCD et $A_n$ $B_n$ $C_n$ $D_n$ où $_n$ = 1 à 5 représentent chacun le cycle de la matière adsorbante (fibres de carbone activé) pour un ensemble de conditions opératoires données pour des systèmes à simple effet.

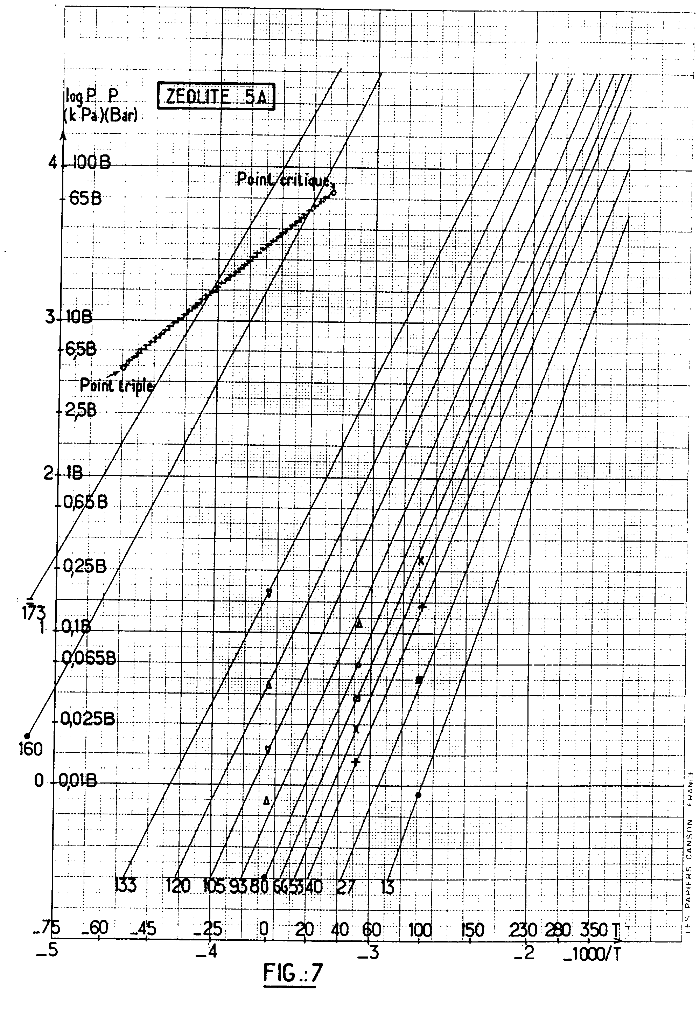

On a également, de façon similaire, déterminé le réseau d'isostères pour une zéolite LINDE 5A (figure 7).

Sur les diagrammes des figures 8 à 12, sur lesquels on a reporté à la fois les isostères des fibres de carbone activé et de la zéolite 5A, les quadrilatères $A_nB_nC_nD_n$ et $E_n$ $F_n$ $G_n$ $H_n$ où $_n$ = 1 à 4 représentent chacun le cycle d'une des matières adsorbantes (fibres de carbone activé et zéolite) pour un ensemble de conditions opératoires données.

Sur tous les diagrammes, les valeurs portées en marge, en face de chaque isostère, représentent des cm$^3$ de $CO_2$/g de matière adsorbante.

L'enthalpie d'adsorption/désorption est de 25 kJ par mole de $CO_2$ adsorbé.

Suivant le type de machine mis en oeuvre, la température du puits (points A des quadrilatères) qui peut être, par exemple, de l'eau de refroidissement ou de l'air extérieur (pris à 35°C dans les exemples ci-après), la température haute disponible (points D des quadrilatères), et la température du froid à produire, la capacité d'adsorption variera.

Ainsi avec une machine à simple effet (figures 1-6), avec une température de puits de 35°C (air extérieur) :

-    production de froid à 0°C ; le réseau d'isostères est ABDC ; le domaine des isostères utilisé est de 274-90, soit 184 $cm^3$/g si on se fixe une température haute Th de 200°C ; si cette température est de 400°C, le réseau $A_1 B_1 C_1 D_1$ permet une capacité d'adsorption de 274-14, soit 260 $cm^3$/g ;

- production de froid à -20°C, le réseau d'isostères est $A_2 B_2 C_2 D_2$ (Th = 200°C) ou $A_3 B_3 C_3 D_3$ (Th = 400°C), permettant les capacités d'adsorption respectivement de 130 $cm^3$/g et de 206 $cm^3$/g ;

- production de froid - 50°C ; le réseau d'isostères est $A_4 B_4 C_4 D_4$ (Th = 200°C) ou $A_5 B_5 C_5 D_5$ (Th = 400°C) avec les capacités respectives d'adsorption de 35 $cm^3$/g et de 110 $cm^3$/g).

L'utilisation de fibres KF 1500 permet de produire une quantité de froid nettement supérieure à celle que permettrait de produire, dans des conditions opératoires comparables, l'usage d'une zéolite 5A. Par exemple on peut calculer (d'après les isostères des figures 1 et 7) que, pour une production de froid à -40°C (ligne des 10 bars), la capacité d'adsorption de $CO_2$ de la fibre KF 1500 est de 215 $cm^3$/g (isostère à 224 $cm^3$/g - isostère à 9 $cm^3$/g). L'isostère à 9 $cm^3$/g est choisie dans la mesure où elle est située à droite de 30°C afin de permettre l'évacuation de la chaleur d'adsorption. La capacité d'adsorption de la zéolite 54 n'est que de 132 $cm^3$/g (isostère à 145 $cm^3$/g (environ) - isostère à 13 $cm^3$/g). La fibre KF 1500 permet donc de produire 1,6 fois (215/132) plus de froid à l'évaporateur.

Avec une machine à résorption (figures 8-12) :

- production de froid à 0°C ; le réseau d'isostères de l'adsorbant KF 1500 produisant le froid est ABCD, celui à haute température avec zéolite 5A est EFGH (Th = 400°C) ou, en variante, $A_1 B_1 C_1 D_1$ et $E_1 F_1 G_1 H_1$ (Th = 250°C). Les capacités d'adsorption de $CO_2$ utilisées sont respectivement : 184 $cm^3$/g sur KF 1500 et 107 $cm^3$/g sur Z 5 A d'une part, et 156 $cm^3$/g sur KF 1500 et 53 $cm^3$/g sur Z 5A, d'autre part ;

- production de froid à - 20°C : les réseaux sont $A_2 B_2 C_2 D_2$ et $E_2 F_2 G_2 H_2$ (Th = 250°C) ou, en variante, $A_3 B_3 C_3 D_3$ et $E_3 F_3 G_3 H_3$ (Th = 400°C). Les capacités d'adsorption utilisées sont respectivement : 187 $cm^3$/g sur KF 1500 et 26 $cm^3$/g sur Z 5 A ; et 187 $cm^3$/g sur KF 1500 et 93 $cm^3$/g sur Z 5 A.

- production de froid à - 60°C, en couplant la fibre de carbone KF 1500 comme adsorbant froid avec une zéolite 5A comme adsorbant à haute température : les domaines sont $A_4 B_4 C_4 D_4$ de capacité 83 $cm^3$/g et $E_4 F_4 G_4 H_4$ de capacité 77 $cm^3$/g, nécessitant une température haute de 390°C.

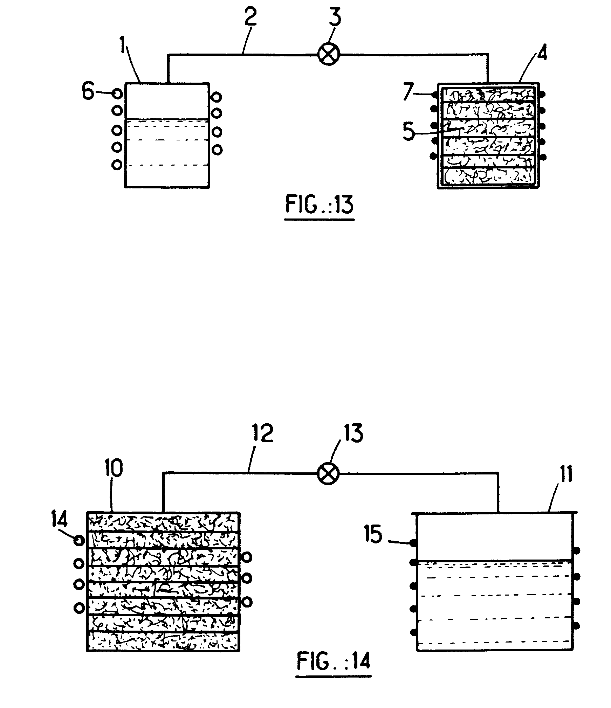

Une machine à simple effet est représentée schématiquement sur la figure 13. Cette machine comprend un réservoir 1 à $CO_2$ liquide relié par une conduite 2 munie d'une vanne 3, à un adsorbeur 4 contenant des fibres de carbone activé 5. Un échangeur de chaleur 6 est prévu sur le réservoir 1 et des moyens de chauffage, tels qu'une résistance électrique 7, sont associés à l'adsorbeur 4. Une telle machine peut servir à la production discontinue de froid (effet de stockage).

Pour produire du froid, par exemple à 0°C, on met le réservoir 1 et l'adsorbeur 4 en communication en ouvrant la vanne 3. La pression interne imposée est de 34,5 bars (figure 1). La température dans l'adsorbeur va de D (150°C) à A (35°C) pendant toute cette phase. Le froid généré est récupéré à partir du réservoir par l'échangeur de chaleur 6.

Pour régénérer le système, on ferme la communication entre 1 et 4 et on laisse la température de 4 remonter de A (35°C) à B (65°C) (montée isostérique, c'est-à-dire le long de l'isostère correspondant à une teneur de $CO_2$ adsorbé de 274 $cm^3$/g de fibres de carbone, puis on réouvre la communication entre 1 et 4 et on chauffe 4 à 200°C au moyen de la résistance chauffante 7 pour désorber le $CO_2$ adsorbé (passage du point B au point C). $CO_2$ se condense en 1 à 30°C (P = 60 bars). Enfin, on laisse 4 se refroidir de 200 à 150°C (passage du point C au point D) après avoir refermé la communication entre 1 et 4. Le système est alors prêt pour une nouvelle phase de production de froid.

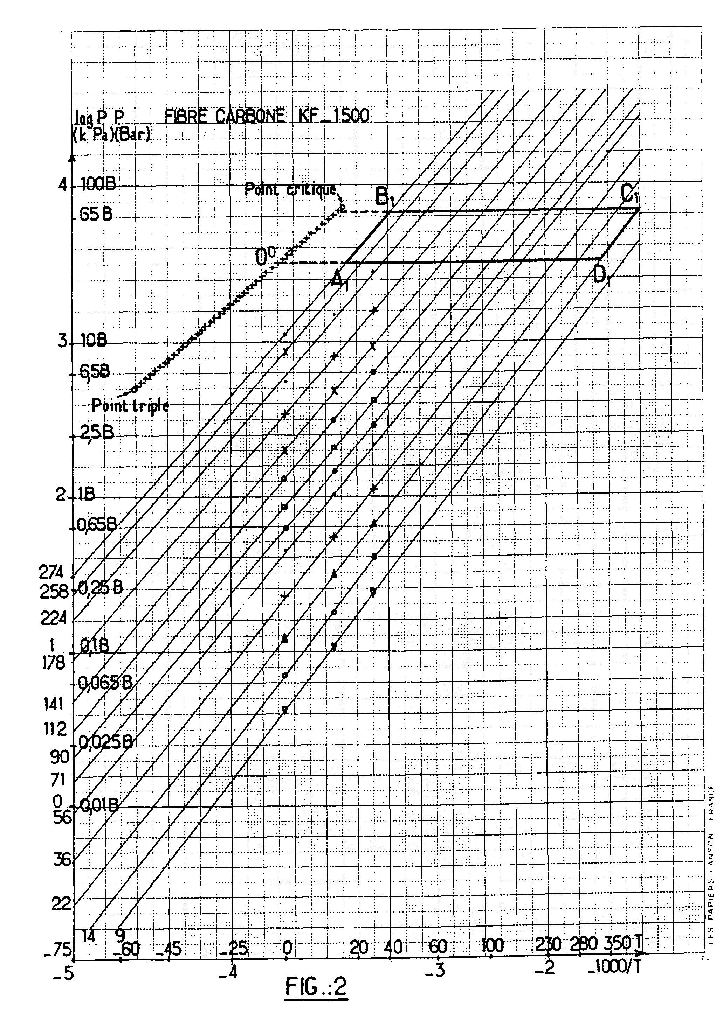

Bien entendu, on pourrait aussi faire fonctionner une telle machine dans des conditions différentes, par exemple comme schématisé par les quadrilatères $A_n B_n C_n D_n$ sur les figures 2 à 6.

Une machine à production de froid à résorption, telle que celle illustrée schématiquement par la figure 14, peut aussi être utilisée pour mettre en oeuvre le procédé de l'invention. Cette machine comprend deux enceintes 10 et 11 garnies respectivement, de fibres de carbone activé et de zéolite 5 A, reliées par une conduite 12 munie d'une vanne 13. Un échangeur de chaleur 14 est prévu autour de l'enceinte 10 et une résistance chauffante 15 est disposée autour de l'enceinte 11.

On opère en suivant les conditions schématisées sur le diagramme de la figure 8, en supposant que les fibres de carbone garnissant l'enceinte 10 sont initialement chargées de $CO_2$ adsorbé.

a) les deux enceintes sont mises en communication, la température de l'enceinte 10 garnie de fibres de carbone passe de - 50°C (point D) à 0°C (point A) tandis que le $CO_2$ se désorbe et passe dans l'enceinte 11 où il est adsorbé par la zéolite qui passe de 190°C (point H) à 45°C (point E).

b) on interrompt la liaison entre les enceintes en fermant la vanne. On laisse l'enceinte 10 se réchauffer de 0°C (point A) à 30°C (point B) dans l'atmosphère ambiante, tandis qu'on chauffe l'enceinte 11 de 45°C (point E) à 70°C (point F) au moyen de la résistance 15.

c) on établit la communication entre les enceintes. On chauffe l'enceinte 11 de 70°C (point F) à 200°C (point G) au moyen de la résistance pour désorber

$CO_2$ de la zéolite et l'adsorber dans la fibre de carbone activé de l'enceinte 10 qui passe de 30°C (point B) à - 40°C (point C).

d) on cesse de chauffer l'enceinte 11 à zéolite qui se refroidit de 200°C (point G) à 190°C. Ce faisant la pression chute dans les deux enceintes de 2 bars à 0,9 bar et la fibre de carbone dans l'enceinte 10 passe de - 40°C (point C) à - 50°C (point D). Le froid produit peut être évacué par l'échangeur 13.

Le cycle peut alors être répété.

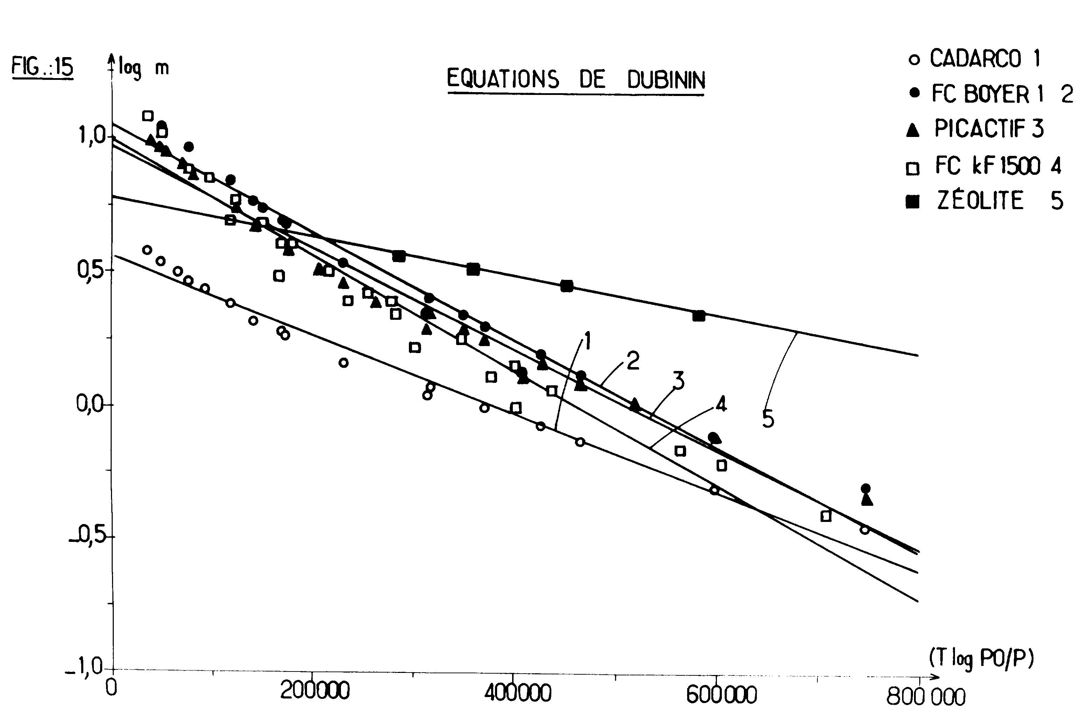

La figure 15 est un diagramme représentant la fonction de Dubinin pour divers agents solides adsorbants.

La fonction de Dubinin est :

$$\log m = T \log Po/P$$

où m = capacité d'adsorption de $CO_2$ de l'agent adsorbant, en millimole/gramme.

Po = pression de vapeur de $CO_2$ saturante à la température T.

T et P = température et pression imposées.

et constitue une bonne illustration de la qualité de l'agent adsorbant.

On voit sur le diagramme de la figure 15 que la fibre de carbone activé KF 1500 (TOYOBO), la fibre de carbone activée OSAKA GAS et le carbone actif PICACTIF (PICA) ont de fortes possibilités d'adsorption de $CO_2$ (log m égal à environ 1) et que les domaines d'isostères sont voisins. Le charbon actif DARCO (produit par la Société DARCO (U.S.A.) et disponible auprès de la Société ALDRICH-FRANCE) a une capacité bien plus faible, tandis que la zéolite 5A, quoique meilleure que le charbon DARCO, en ce qui concerne la capacité d'adsorption, présente l'inconvénient que son domaine de stabilité est situé à des températures élevées.

Il va de soi que les modes de réalisation décrits ne sont que des exemples et l'on pourrait les modifier, notamment par substitution d'équivalents techniques, sans sortir pour cela du cadre de l'invention.

**Revendications**

1. Un procédé de production de froid comprenant au moins une étape d'adsorption de dioxyde de carbone par une matière solide adsorbante, et au moins une étape de désorption du dioxyde de carbone adsorbé dans ladite matière adsorbante, dans lequel ladite matière adsorbante comprend des fibres de carbone activé ou un charbon actif et présente une surface spécifique d'au moins 700 $m^2/g$ et une surface spécifique externe d'au moins 0,005 $m^2/g$.

2. Procédé selon la revendication 1, dans lequel les fibres de carbone activé ont une surface spécifique d'au moins 1000 $m^2/g$ et une surface spécifique externe d'au moins 0,2 $m^2/g$.

3. Dispositif de production de froid par adsorption/désorption de dioxyde de carbone, comprenant au moins une enceinte garnie d'une matière solide adsorbante, dans lequel ladite matière adsorbante comprend des fibres de carbone activé ou un charbon actif et présente une surface spécifique d'au moins 700 $m^2/g$ et une surface spécifique externe d'au moins 0,005 $m^2/g$.

4. Dispositif selon la revendication 3, dans lequel les fibres de carbone activé ont une surface spécifique d'au moins 1000 $m^2/g$, et une surface spécifique externe d'au moins 0,2 $m^2/g$.

5. Dispositif selon la revendication 3, qui est du type à résorption et comporte au moins deux enceintes interconnectables (10, 11) garnies de matières solides adsorbantes différentes, l'une de ces matières adsorbantes étant des fibres de carbone activé ou un charbon actif et présentant une surface spécifique d'au moins 700 $m^2/g$ et une surface spécifique externe d'au moins 0,005 $m^2/g$, et étant soumise, sur un diagramme de Clapeyron, à un cycle d'adsorption/désorption situé à gauche du puits de température utilisé, et l'autre matière adsorbante étant choisie de manière que son cycle d'adsorption/désorption se situe à droite dudit puits.

6. Dispositif selon la revendication 5, dans lequel l'autre matière adsorbante est une zéolite.

**Patentansprüche**

1. Verfahren zur Erzeugung von Kälte, das mindestens einen Schritt der Adsorption von Kohlendioxid durch ein adsorbierendes festes Material und mindestens einen Schritt der Desorption des in diesem adsorbierenden Material adsorbierten Kohlendioxids umfaßt und bei dem das adsorbierende Material Fasern aus aktiviertem Kohlenstoff oder Aktivkohle umfaßt und eine spezifische Oberfläche von mindestens 700$m^2/g$ und eine spezifische Außenfläche von mindestens 0,005 $m^2/g$ besitzt.

2. Verfahren nach Anspruch 1, bei dem die Fasern aus aktiviertem Kohlenstoff eine spezifische Oberfläche von mindestens 1000 $m^2/g$ und eine spezifische Außenfläche von mindestens 0,2 $m^2/g$ besitzen.

3. Vorrichtung zur Erzeugung von Kälte durch Adsorption/Desorption von Kohlendioxid, die mindestens eine mit einem adsorbierenden festen Material gefüllte Kammer aufweist und bei der das adsorbierende Material Fasern aus aktiviertem Kohlenstoff oder eine Aktivkohle umfaßt und eine spezifische Oberfläche von mindestens 700 m²/g und eine spezifische Außenfläche von mindestens 0,005 m²/g besitzt.

4. Vorrichtung nach Anspruch 3, bei der die Fasern aus aktiviertem Kohlenstoff eine spezifische Oberfläche von mindestens 1000 m²/g und eine spezifische Außenfläche von mindestens 0,2 m²/g besitzen.

5. Vorrichtung nach Anspruch 3, die eine Resorptionsvorrichtung ist und mindestens zwei miteinander verbindbare Kammern (10, 11) aufweist, die mit verschiedenen adsorbierenden festen Materialien gefüllt sind, wobei eines dieser adsorbierenden Materialien aus Fasern aus aktiviertem Kohlenstoff oder aus einer Aktivkohle besteht und eine spezifische Oberfläche von mindestens 700 m²/g und eine spezifische Außenfläche von mindestens 0,005 m²/g besitzt und auf einem Clapeyron-Diagramm einem Adsorptions/Desorptions-Zyklus unterworfen ist, der links von der verwendeten Temperatursenke liegt, und das andere adsorbierende Material so gewählt ist, das sein Adsorptions/Desorptions-Zyklus rechts von dieser Senke liegt.

6. Vorrichtung nach Anspruch 5, bei der das andere adsorbierende Material ein Zeolit ist.

## Claims

1. A process for the production of cold, comprising at least one stage of adsorption of carbon dioxide by an adsorbent solid substance and at least one stage of desorption of the carbon dioxide adsorbed in said adsorbent substance, in which process said adsorbent substance comprises activated carbon fibers or an active charcoal and has a specific surface of at least 700 m²/g and an external specific surface of at least 0.005 m²/g.

2. The process as claimed in claim 1, wherein the activated carbon fibers have a specific surface of at least 1000 m²/g and an external specific surface of at least 0.2 m²/g.

3. A device for the production of cold by adsorption/desorption of carbon dioxide, comprising at least one vessel packed with an adsorbent solid substance, in which device said adsorbent substance comprises activated carbon fibers or active charcoal and has a specific surface of at least 700 m²/g and an external specific surface of at least 0.005 m²/g.

4. The device as claimed in claim 3, wherein the activated carbon fibers have a specific surface of at least 1000 m²/g and an external specific surface of at least 0.2 m²/g.

5. The device as claimed in claim 3, which is of the resorption type and comprises at least two interconnectable vessels (10, 11) packed with different adsorbent solid substances, one of these adsorbent substances being activated carbon fibers or an active charcoal and having a specific surface of at least 700 m²/g and an external specific surface of at least 0.005 m²/g, and being subjected, on a Clapeyron diagram, to an adsorption/desorption cycle situated on the lefthand side of the temperature well employed, and the other adsorbent substance being chosen so that its adsorption/desorption cycle is situated on the right-hand side of said well.

6. The device as claimed in claim 5, wherein the other adsorbent substance is a zeolite.

FIG.:1

FIG.:2

FIG.:3

FIG.: 4

FIG.:5

FIG.:6

FIG.:7

FIG.:8

FIG.:9

15

FIG.:10

FIG.:11

FIG.:12

FIG.:13

FIG.:14

FIG.:15

log m

EQUATIONS DE DUBININ

o CADARCO 1
● FC BOYER 1  2
▲ PICACTIF 3
□ FC kF 1500  4
■ ZÉOLITE  5

(T log PO/P)

EP 0 636 672 B1